# DEMANDE DE BREVET EUROPEEN

(11) **EP 1 843 578 A2**
(43) Date de publication de la demande: **10.10.2007**
(21) Numéro de dépôt: 07113147.8
(22) Date de dépôt: 27.06.2001
(51) Int. Cl.: H04N 5/63

(54) **Appareil multimédia de réception d'émission audiovisuelle**

(30) Priorité: 27.06.2000 FR 0008238
(62) Demande divisionnaire de: 01949545.6
(71) Demandeur: Thomson Licensing, 92100 Boulogne-Billancourt (FR)
(72) Inventeur: Bertin, Jean-Pierre, 92648 Boulogne Cedex (FR); Guitton, Xavier, 92648 Boulogne Cedex (FR); Lepoil, Philippe, 92648 Boulogne Cedex (FR)
(74) Mandataire: Le Dantec, Claude

(57) **Abrégé**

La présente invention concerne un procédé pour commuter un appareil d'un premier mode de fonctionnement, dit veille, vers un second mode de fonctionnement, dit réveil. L'appareil comporte un circuit de communication doté de moyens de connexion à un réseau de communication bidirectionnelle, un connecteur pour la communication avec un appareil source, ledit connecteur comportant au moins un conducteur (VBUS) pour la transmission d'une tension d'alimentation en provenance de l'appareil source. Le procédé comporte une étape de détection par un moyen de détection de la présence de ladite tension d'alimentation (VBUS) relié au connecteur, ledit moyen de détection générant, un signal de détection à l'apparition de la tension d'alimentation, vers le circuit de communication, ladite étape de détection déclenchant à l'apparition de la tension d'alimentation du bus une étape de commutation de l'appareil du premier mode de fonctionnement, dit veille pour lequel le circuit de communication a le minimum de fonctions actives au second mode de fonctionnement, dit réveil pour lequel le circuit de communication a sa fonction de communication, entre le connecteur et le réseau, activée.

## Description

La présente invention concerne un appareil multimédia de réception d'émission audiovisuelle pouvant, par exemple, être relié à un ordinateur personnel. L'appareil multimédia de réception d'émission audiovisuelle peut, par exemple, être constitué par un décodeur ou tout autre appareil reliable à un réseau câblé bidirectionnel.

La plupart des décodeurs numériques pour réseau câblé de télévision seront équipés d'une voie retour. Cette voie retour sera utilisée pour des fonctions d'interactivité entre l'utilisateur du programme audio vidéo décodé et l'opérateur du réseau de télévision.

Les décodeurs numériques actuels, pour être en conformité avec la norme européenne en vigueur, présentent un mode veille (stand by) à faible consommation. Cet état est atteint lorsque seulement les fonctions indispensables au réveil de l'appareil multimédia sont alimentées. Par exemple, le décodeur alors en mode veille doit pouvoir être réveillé, pour effectuer l'enregistrement d'un programme de télévision sur magnétoscope. Cette fonction réveil est activée soit par la télécommande du décodeur, soit par le clavier de la face avant du décodeur. Un signal émis par la télécommande et reçu par le photorécepteur en face avant du décodeur ou une activation des touches du clavier va provoquer une interruption sur le processeur de clavier du décodeur qui est le seul processeur à rester actif en permanence et à surveiller les interruptions qui peuvent être provoquées par l'un de ces deux évènements. Lorsqu'un tel processeur détecte un tel événement, il déclenche le mode réveil du décodeur qui nécessite une séquence de quelques secondes. Un tel décodeur ne peut donc être utilisé comme interface de communication entre un PC et un opérateur s'il n'est pas pourvu d'un dispositif permettant de le réveiller.

Un premier but de l'invention est de pourvoir un appareil multimédia de réception d'émission audiovisuelle, tel que par exemple un décodeur numérique, des équipements nécessaires pour permettre le passage d'un mode de fonctionnement réduit, par exemple veille, à un mode de fonctionnement normal, permettant notamment la connexion d'un appareil source, tel que par exemple un ordinateur, à Internet.

Ce but est atteint par un procédé pour commuter un appareil (20) d'un premier mode de fonctionnement, dit veille, vers un second mode de fonctionnement, dit réveil, l'appareil (20) comportant : un circuit de communication (9, 8, 10, 3, 7) avec des moyens de connexion à un réseau de communication bidirectionnelle, un connecteur (11) pour la communication avec un appareil source (17), ledit connecteur comportant au moins un conducteur (VBUS) pour la transmission d'une tension d'alimentation en provenance de l'appareil source (17),
caractérisé en ce qu'il comporte une étape de détection par un moyen de détection (1) de la présence de ladite tension d'alimentation (VBUS) relié au connecteur (11), ledit moyen de détection (1) générant, un signal de détection à l'apparition de la tension d'alimentation, vers le circuit de communication (3), ladite étape de détection déclenchant à l'apparition de la tension d'alimentation du bus une étape de commutation de l'appareil (20) du premier mode de fonctionnement, dit veille pour lequel le circuit de communication (3) a le minimum de fonctions actives au second mode de fonctionnement, dit réveil pour lequel le circuit de communication (3) a sa fonction de communication, entre le connecteur (11) et le réseau, activée.

Selon une autre particularité, le circuit de commutation est constitué par un premier microprocesseur d'un moyen de commande de l'appareil multimédia et d'un programme de déclenchement des actions de réveil constituant la séquence de réveil du circuit de communication.

Selon une autre particularité, le moyen de commande est un clavier de commande et/ou un récepteur de télécommande dudit appareil multimédia, ledit moyen de commande étant relié à une entrée d'interruption dudit premier microprocesseur.

Selon une autre particularité, les moyens de détection sont reliés à une entrée d'interruption du premier microprocesseur recevant le signal de détection.

Selon une autre particularité, le premier microprocesseur est relié à un circuit d'alimentation général de l'appareil multimédia pour activer ledit circuit d'alimentation en réponse à l'apparition du signal de détection.

Selon une autre particularité, les moyens de détection sont constitués d'un interrupteur électronique générant une tension sur une des entrées du premier microprocesseur.

Selon une autre particularité, ledit appareil comporte un décodeur de télévision numérique, ledit circuit de communication comportant un circuit de connexion à un réseau câblé bidirectionnel.

Selon une autre particularité, ledit appareil comporte un circuit d'interface adapté au type de connecteur relié au bus interne du décodeur numérique reliant un processeur principal du décodeur à un processeur de canal de retour du décodeur numérique, ledit processeur de canal de retour étant relié, par un circuit d'interface à un câble de liaison au réseau câblé bidirectionnel reliant le décodeur numérique au service du serveur de l'opérateur audiovisuel.

Selon une autre particularité, ledit appareil comporte des moyens de déclencher la connexion à Internet à travers le service du serveur de l'opérateur audiovisuel.

D'autres particularités et avantages de l'invention apparaîtront plus clairement à la lecture de la description ci-après faite en référence aux dessins annexés dans lesquels :
- la figure 1 représente une vue schématique du dispositif de réveil selon l'invention;
- la figure 2 représente une vue schématique de l'intégration du dispositif de réveil dans un décodeur et la communication de ce décodeur avec d'une part un ordinateur personnel et d'autre part le câble du réseau de diffusion d'émission audiovisuelle.

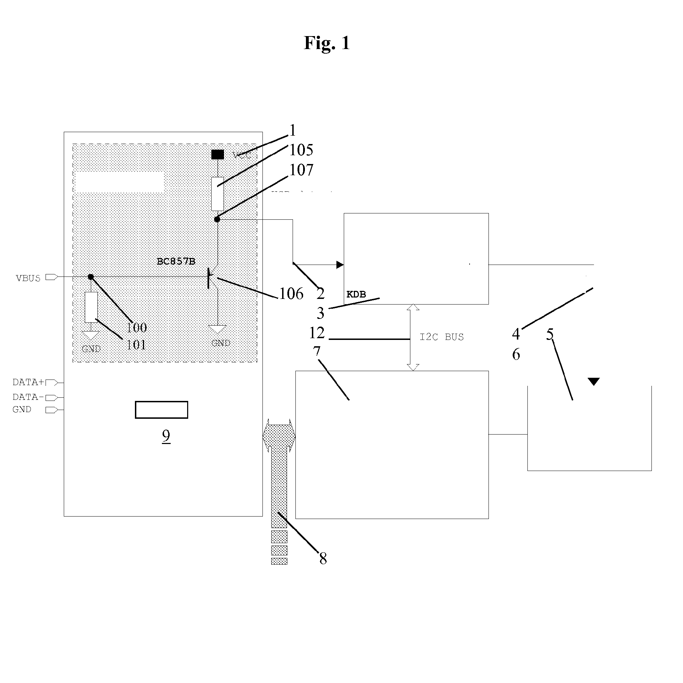

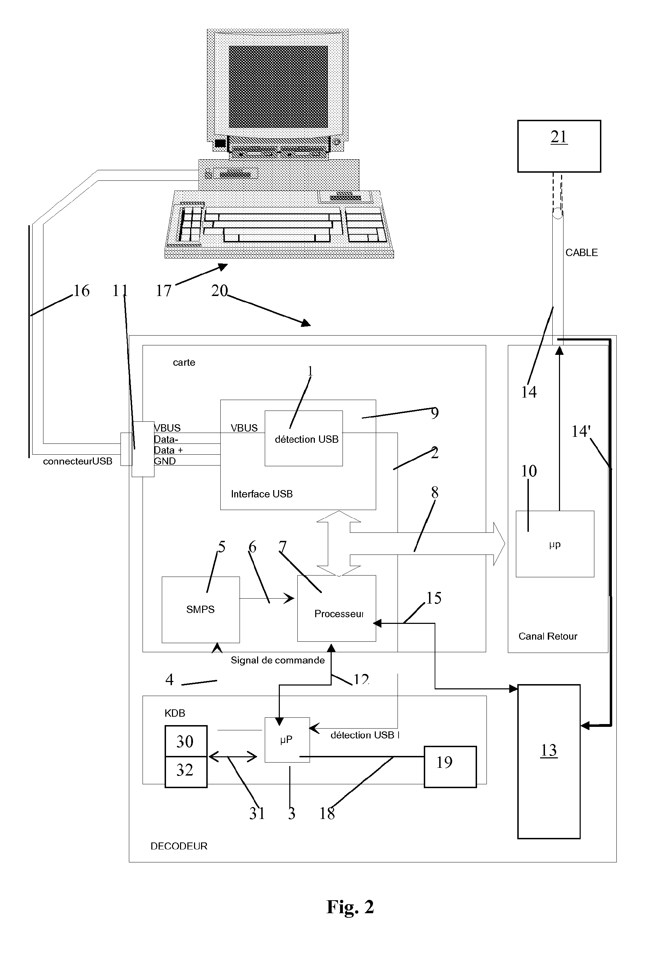

Un mode de réalisation non limitatif de l'invention sera maintenant décrit avec les figures 1 et 2.

Un ordinateur personnel (17) portable ou non est relié par un câble (16) de type USB (Universal Serial Bus) à un connecteur USB (11) faisant partie d'un décodeur (20). L'ordinateur (17) joue ici le rôle de maître du bus USB. L'ordinateur est utilisé ici à titre d'exemple d'appareil source, mais tout autre appareil électronique requérant une connexion à un réseau Internet peut aussi être utilisé. Le décodeur (20) est donné à titre d'exemple d'appareil multimédia à mode de fonctionnement réduit mais l'invention peut être appliquée à tout autre type d'appareil multimédia de réception d'émission audiovisuelle. Le décodeur (20) est relié à un câble spécifique pour la télévision numérique (14) qui permet, par un service du serveur (21) de l'opérateur, la connexion à Internet à travers le service du centre serveur 21 de l'opérateur audiovisuel. L'intérêt d'un tel système est de permettre:
- d'une part une liaison rapide avec un débit de 12 mégabits entre l'ordinateur personnel et le décodeur par le câble USB,
- et d'autre part, par l'intermédiaire du câble (14) reliant le décodeur au service du serveur (21) de l'opérateur, une liaison haut débit (plusieurs mégabits par seconde) de l'ordinateur au réseau Internet.

Cette liaison est permise avec une modification mineure de l'appareil multimédia, dans l'exemple donné, du décodeur. Cette modification mineure consiste à intégrer dans le décodeur un connecteur USB (11) dont la borne d'entrée (VBUS) est reliée à un circuit (1) de détection de la tension VBUS (c'est à dire la tension d'alimentation du bus USB générée par le maître). Ce circuit (1) appartient à un circuit d'interface USB (9), lequel est relié aux bornes d'entrée (DATA+, DATA-) et à la masse du connecteur USB (11). La sortie du circuit de détection (1) est reliée par une liaison (2) à une entrée d'interruption d'un microprocesseur (3) qui est le microprocesseur du clavier du décodeur et du panneau de face avant. Ce microprocesseur est relié par une liaison (4) au circuit d'alimentation principale (5) et par un bus I2C (12) au processeur principal (7). L'alimentation principale alimente le microprocesseur principal (7).

Ce microprocesseur (3) est le seul dans le décodeur à être en permanence actif, même lorsque le décodeur rentre dans le mode veille. Il suffit que la prise du décodeur soit connectée au réseau d'alimentation électrique. En effet, dans le mode veille, seul ce microprocesseur surveille en permanence ses entrées pour détecter des signaux traités comme des interruptions représentant:
- soit un signal provenant du clavier de la face avant du décodeur constituant pour le microprocesseur une interruption,
- soit un signal, produit par le photorécepteur (19) relié par une liaison (18) au microprocesseur (3), lié à l'émission d'une commande à l'aide de la télécommande par l'utilisateur.

Selon l'invention il est aussi utilisé pour détecter une interruption liée à la détection du branchement d'un connecteur USB.

Dans une autre variante le microprocesseur peut surveiller en permanence ses entrées numériques (polling) pour détecter les changements d'états des entrées et effectuer les traitements souhaitables.

Dans son fonctionnement, le décodeur, lorsqu'il détecte par son microprocesseur (3) une interruption, envoie un signal par la liaison (4) sur l'alimentation principale de l'ensemble du décodeur laquelle alimente alors par la (liaison (6)) le processeur principal (7) pour réveiller les fonctionnalités du décodeur nécessaires à la fonction commandée. Cette fonctionnalité permettra l'enregistrement d'un programme TV sur le magnétoscope ou la visualisation d'un canal reçu par le décodeur sur la télévision ou encore l'utilisation du décodeur en tant que modem. Pour ces applications d'enregistrement ou de visualisation de canal reçu, le processeur principal (7) dialogue avec un bus (15) de transport de signaux audio, vidéo, numériques et l'étage (13) de réception RF du décodeur qui est relié par un câble de dérivation (14') au câble (14) d'entrée-sortie du décodeur.

Selon le type de commande reçu par le processeur (3), celle-ci sera envoyée par la liaison (12) du bus I2C reliant le processeur (3) de panneau avant au processeur principal (7), lequel traitera l'information et dialoguera avec le processeur (10), au travers du bus processeur (8) qui le relie au processeur (10) de canal de retour. Ce processeur (10) est relié par une interface de sortie au câble (14) pour permettre une interactivité entre l'opérateur et l'utilisateur par transmission et réception de données numériques. Le microprocesseur (3) de clavier ou de face avant est associé par son bus processeur (31) à une mémoire, laquelle contient un module de programme (30) qui gère les interruptions apparaissant sur les lignes (18) pour déclencher, en fonction de ces interruptions, la mise en éveil de l'ensemble du décodeur. L'exemple de réalisation de l'invention consiste à rajouter en plus du circuit de détection (1) une ligne (2) en sortie du circuit (1) de détection de la tension VBUS, cette ligne étant envoyée sur une entrée d'interruption de haut niveau du microprocesseur (3) pour déclencher l'exécution d'un module de programme (32) effectuant le traitement de cette interruption et réalisant, dans un premier temps l'envoi par la ligne (4) d'un signal de réveil de l'alimentation principale (5) du décodeur puis par le bus I2C (12), l'envoi d'une commande vers le processeur principal (7), de façon que celui-ci dialogue avec le microprocesseur (10) du canal de retour à travers le bus processeur (8) et pour mettre ce dernier en attente de l'arrivée de signaux sur son bus (8) provenant de la carte d'interface (9) du connecteur USB (11). Ainsi, le circuit d'interface (9) aura pour rôle de transformer le protocole d'échange des signaux USB entre l'ordinateur personnel (17) et le circuit d'interface (9) en un protocole de communication compatible entre les deux processeurs (10) de canal de retour et (7) principal par l'intermédiaire du bus (8).

Comme on peut le voir sur la figure 1, la borne VBUS du connecteur USB est reliée à un point commun (100), lequel est relié d'une part à travers une résistance (101) à la masse et d'autre part à la base d'un transistor PNP (106). Le transistor PNP a son collecteur relié à la masse et son émetteur relié au point commun (107) et à une résistance (105), dont la seconde extrémité est reliée au point d'alimentation en tension VCC. Le dernier point commun (107) délivre le signal de détection de la présence de la tension VBUS sur la ligne (2) qui est reliée à l'entrée d'interruption de plus haut niveau du microprocesseur (3) du panneau de face avant. Les autres éléments de la figure 2 sont identiques à ceux de la figure 1 et sont désignés par les mêmes références. Lorsque la tension VBUS est appliquée sur ce composant et atteint une tension de l'ordre de 4,75 à 5,25 Volts, ce qui signifie que le câble USB d'un ordinateur personnel sous tension et éveillé est connecté au connecteur (11) du décodeur, le transistor BC857B (106) devient passant et le signal de détection sur la liaison (2) a un potentiel proche de zéro qui correspond à un niveau logique zéro, ce qui déclenche le traitement au niveau du microprocesseur (3) d'une interruption de type haut niveau. Cette interruption provoque le réveil par le module de programme (32) de la partie du décodeur nécessaire au fonctionnement des circuits réalisant l'interface entre le câble réseau (14) et le câble USB (16). Dans la liaison de l'ordinateur (17) avec le réseau Internet, la partie interface (9, 10) du décodeur fonctionne en mode esclave par rapport à l'ordinateur personnel (17), ce qui signifie que des signaux de commande pour des fonctions de télévision interactive provenant de la télécommande sont, soit momentanément rendus inactifs par le processeur principal (7) et un affichage commandé par ce processeur (7) indique à l'utilisateur que la fonction d'interactivité est interrompue suite à une connexion sur Internet, soit le microprocesseur (7) réalise un multiplexage de ces signaux avec ceux provenant de l'ordinateur personnel (17). Dans ce dernier cas, l'interface USB (9) incorpore dans les signaux provenant du bus USB un identifiant et le microprocesseur principal (7) incorpore lui aussi dans les signaux provenant de la télécommande un identifiant différent permettant au service (21) de l'opérateur de faire la distinction entre les signaux provenant de l'ordinateur personnel (17), destinés à la liaison Internet et ceux destinés à produire des modifications des services délivrés, provenant de la télécommande. Ainsi l'ordinateur réveille automatiquement le décodeur par l'activation de la tension sur le bus USB, ce qui permet de préparer une communication par l'intermédiaire du réseau câblé.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé pour commuter un appareil (20) d'un premier mode de fonctionnement, dit veille, vers un second mode de fonctionnement, dit réveil, l'appareil (20) comportant : un circuit de communication (9, 8, 10, 3, 7) avec des moyens de connexion à un réseau de communication bidirectionnelle, un connecteur (11) pour la communication avec un appareil source (17), ledit connecteur comportant au moins un conducteur (VBUS) pour la transmission d'une tension d'alimentation en provenance de l'appareil source (17),
**caractérisé en ce qu'**il comporte une étape de détection par un moyen de détection (1) de la présence de ladite tension d'alimentation (VBUS) relié au connecteur (11), ledit moyen de détection (1) générant, un signal de détection à l'apparition de la tension d'alimentation, vers le circuit de communication (3), ladite étape de détection déclenchant à l'apparition de la tension d'alimentation du bus une étape de commutation de l'appareil (20) du premier mode de fonctionnement, dit veille pour lequel le circuit de communication (3) a le minimum de fonctions actives au second mode de fonctionnement, dit réveil pour lequel le circuit de communication (3) a sa fonction de communication, entre le connecteur (11) et le réseau, activée.

2. Procédé pour commuter un appareil d'un premier mode de fonctionnement vers un second mode de fonctionnement selon la revendication 1 ; **caractérisé en ce que** le circuit de commutation (3) est constitué par un premier microprocesseur (3) recevant des commandes et un programme (32) déclenchant une séries d'étapes de réveil permettant au circuit de communication d'activer sa fonction de communication.

3. Procédé pour commuter un appareil d'un premier mode de fonctionnement vers un second mode de fonctionnement selon la revendication 1 ou 2 ; **caractérisé en ce que** l'étape de commutation de l'appareil est en outre déclenchée par une commande provenant d'un clavier et/ou d'un récepteur de télécommande (19) dudit appareil multimédia (20).

4. Procédé pour commuter un appareil d'un premier mode de fonctionnement vers un second mode de fonctionnement selon la revendication 2 ; **caractérisé en ce que** le premier microprocesseur (3) reçoit par une entrée d'interruption le signal de détection généré par le moyen de détection (1) lors de l'apparition de la tension d'alimentation sur le conducteur (VBUS).

5. Procédé pour commuter un appareil d'un premier mode de fonctionnement vers un second mode de fonctionnement selon une des revendications précédentes ; **caractérisé en ce que** le circuit de commutation (3) déclenche une étape d'activation d'un circuit d'alimentation général de l'appareil multimédia lors de l'apparition de la tension d'alimentation sur le conducteur (VBUS).

6. Procédé pour commuter un appareil d'un premier mode de fonctionnement vers un second mode de fonctionnement selon une des revendications précédentes; **caractérisé en ce que** ledit appareil comporte un décodeur de télévision numérique, et **en ce qu'**il comporte une étape de connexion par ledit circuit de communication (3) avec un réseau câblé bidirectionnel.

7. Procédé pour commuter un appareil d'un premier mode de fonctionnement vers un second mode de fonctionnement selon une des revendications précédentes; **caractérisé en ce qu'**il comporte une étape de déclenchement d'une connexion à Internet à travers le service d'un serveur d'un opérateur audiovisuel.

8. Procédé pour commuter un appareil d'un premier mode de fonctionnement vers un second mode de fonctionnement selon une des revendications précédentes ; **caractérisé en ce que** le circuit de commutation (3) déclenche une étape de transformation des signaux échangés entre l'appareil source (17) et les signaux provenant d'un réseau câblé bidirectionnel, lors de l'apparition de la tension d'alimentation sur le conducteur (VBUS).
